# FASCICULE DE BREVET EUROPEEN

(11) **EP 2 198 181 B1**
(45) Date de publication et mention de la délivrance du brevet: **03.10.2012**
(21) Numéro de dépôt: 08831229.3
(22) Date de dépôt: 22.08.2008
(51) Int. Cl.: F16F 7/10

(54) **DISPOSITIF DE MONTAGE SECURISE D'UN ACTIONNEUR ANTI-VIBRATOIRE SUR UN VEHICULE AUTOMOBILE**
VORRICHTUNG ZUR SICHEREN MONTAGE EINES ANTIVIBRATIONSAKTUATORS AN EINEM AUTOMOBIL
DEVICE FOR THE SECURED MOUNTING OF AN ANTI-VIBRATION ACTUATOR ON AN AUTOMOBILE

(30) Priorité: 11.09.2007 FR 0757504
(43) Date de publication de la demande: 23.06.2010
(73) Titulaire: Peugeot Citroën Automobiles SA, 78140 Vélizy-Villacoublay (FR)
(72) Inventeur: LANOTTE, Stéphane, F-94100 Saint Maur Des Fosses (FR); DUSI, Jacques, F-77220 Gretz Armainvilliers (FR); ALARCON COT, Albert, F-92100 Boulogne Billancourt (FR)
(86) Numéro de dépôt international: PCT/FR2008/051521
(87) Numéro de publication internationale: WO 2009/034279

(56) Documents cités:
- FR-A- 2 797 790
- JP-A- 2004 076 765
- JP-A- 2004 169 913

## Description

Le domaine technique de l'invention concerne les systèmes antivibratoires de type actionneur piloté, qui sont implantés sur les véhicules automobiles, et dont la fréquence de vibration est réglée pour réduire, voire annuler, les vibrations produites par le moteur. Généralement, ces actionneurs pilotés sont fixés au moyen d'une vis sur la caisse du véhicule, et le risque de voir chuter accidentellement ces actionneurs sur la chaussée, n'est pas négligeable. Les conséquences d'un tel évènement seraient redoutables tant au niveau des blessures causées sur les piétons, que des dommages matériels occasionnés sur d'autres véhicules environnants. La présente invention a pour objet un dispositif de montage d'actionneurs antivibratoires, garantissant une sécurité accrue pour empêcher le décrochement accidentel de ces actionneurs.

Les dispositifs de montage de systèmes antivibratoires sur la caisse d'un véhicule automobile existent déjà et ont fait l'objet de brevet. On peut, par exemple, citer le brevet JP 2004169913, qui se rapporte à un dispositif de montage d'un système antivibratoire sur une caisse de véhicule, impliquant deux vis de fixation. De cette manière, dans le cas d'une rupture accidentelle de l'une des deux vis, l'autre vis permet de maintenir ledit système solidaire de ladite caisse, et empêche donc sa chute. Dans la configuration décrite dans ce brevet, les deux vis sont fixées à une même paroi de la caisse du véhicule. Les dispositifs de montage impliquant deux vis, sont alourdis par un élément non fonctionnel, constitué par la deuxième vis. De plus, cette deuxième vis accroît l'encombrement dudit dispositif de montage. Enfin, les dispositifs à deux vis ne peuvent pas être facilement implantés sur certains véhicules, en raison de la dimension de l'entraxe entre lesdites vis, qui est supérieur aux dimensions de l'actionneur, et qui rendent les vis difficilement accessibles à certains outils, comme, par exemple, des visseuses.

Les dispositifs de montage selon l'invention, permettant d'implanter des systèmes antivibratoires dans un véhicule automobile, mettent en jeu des moyens permettant d'éviter la chute accidentelle de ces systèmes, en s'affranchissant de tous les problèmes précités.

La présente invention a pour objet un dispositif de montage d'un actionneur antivibratoire sur un véhicule automobile, comprenant une vis de fixation dudit actionneur sur une paroi de la caisse dudit véhicule. La principale caractéristique d'un dispositif de montage selon l'invention, est qu'il est doté d'une glissière fixée sur ladite paroi, et que l'actionneur comprend une protubérance apte à venir s'insérer dans ladite glissière, de sorte que ledit actionneur possède deux points de solidarisation à ladite paroi. Dans un souci de clarté et pour une bonne compréhension de la description, nous supposons que la glissière comprend, de façon systématique, une rainure. Ainsi, pour cette configuration, l'actionneur antivibratoire comprend, en plus d'une vis de fixation principale, un deuxième point d'ancrage à la caisse, ne nécessitant pas l'intervention d'une visseuse ou d'un autre outil. De plus, par rapport à cette vis, il n'existe aucune contrainte au niveau du lieu d'implantation de ce deuxième point d'ancrage. La protubérance est introduite dans la glissière par le coté, et coulisse latéralement selon un plan parallèle au plan de la paroi. Il est bien évident qu'un véhicule peut être muni de plusieurs de ces dispositifs de montage, si il devait supporter plusieurs actionneurs antivibratoires.

Avantageusement, la glissière comporte une rainure dotée d'un alésage, pour permettre à la vis de traverser ladite glissière. De cette manière, la vis sert, à la fois, à fixer l'actionneur antivibratoire et la glissière sur la paroi de la caisse.

De façon préférentielle, la protubérance est allongée, et l'axe de la vis est parallèle à l'axe longitudinal de ladite protubérance.

De façon avantageuse, la protubérance possède un canal central pour permettre le passage de la vis. Pour cette configuration, bien que les axes de la vis et de la protubérance soient confondus, les deux points d'ancrage demeurent distincts. Puisque les deux points d'ancrage sont réalisés sur le même élément de surface de la paroi, l'encombrement du dispositif de montage, selon l'invention, est minimum.

Préférentiellement, la protubérance comprend un corps cylindrique se terminant par un embout cylindrique évasé. Autrement dit, c'est cet embout élargi qui est inséré dans la rainure de la glissière par coulissement latéral.

Avantageusement, la glissière est munie d'une butée de positionnement pour la protubérance. De façon préférentielle, la butée est placée à une extrémité de la glissière, qui est opposée à celle par laquelle est introduite ladite protubérance. La protubérance est ainsi introduite dans la glissière, jusqu'à être arrêtée par ladite butée.

De façon avantageuse, l'actionneur comporte un noyau de fer doux, prolongé par la protubérance, la vis traversant ces deux éléments en continuité l'un de l'autre. La vis, la protubérance et le noyau de fer doux représentent les parties fixes dudit actionneur.

De façon avantageuse, le noyau de fer doux est entouré par une bobine magnétique et par un ressort en caoutchouc, ledit ressort étant interposé entre la paroi et ladite bobine. Sous l'effet d'un courant électrique, et du noyau en fer doux, la bobine se met à vibrer. Le ressort en caoutchouc a une forme conique, et permet d'entretenir ces vibrations.

Préférentiellement, le noyau est bloqué en translation autour de la vis, au moyen d'une rondelle et d'un écrou, placés à l'une des extrémités dudit noyau.

De façon avantageuse, la glissière est dotée d'un dispositif anti-retour, empêchant la protubérance de se déplacer en sens inverse de celui de son insertion dans ladite glissière. En effet, il faut éviter que la protubérance ne sorte de la glissière, sous peine de voir chuter l'actionneur en cas de rupture de la vis. Puisque d'un coté, la glissière dispose d'une butée fixe, il faut implanter, de l'autre coté, une butée amovible, permettant l'introduction de la protubérance dans la glissière, mais empêchant son extraction dans l'autre sens.

Selon un premier mode de réalisation préféré de l'invention, le dispositif anti-retour est constitué par un ressort à lame, apte à se déformer lors de l'insertion de la protubérance dans la glissière, et apte à retrouver sa position de repos, après le passage de ladite protubérance.

Selon un deuxième mode de réalisation préféré de l'invention, le dispositif anti-retour est constitué par une vis pointeau émergeant dans la rainure de la glissière. De cette manière, une fois que la protubérance a été placée en butée au fond de la glissière, la vis pointeau est introduite dans la rainure de la glissière, pour empêcher le retour de la protubérance.

L'invention se rapporte également à un véhicule automobile comprenant un dispositif de montage d'un actionneur antivibratoire conforme à l'invention.

Les dispositifs de montage selon l'invention présentent l'avantage d'être peu encombrants et d'être faciles à mettre en oeuvre, car les deux points d'attache de l'actionneur, bien que distincts, sont situés au même endroit sur la caisse du véhicule, et le deuxième point d'attache est conçu pour éviter l'utilisation d'un outillage lourd et complexe pour son implantation. Enfin, ils sont fiables, car les mécanismes de liaison avec la caisse sont de conception simple.

On donne ci-après une description détaillée d'un mode de réalisation préféré d'une structure de montage selon l'invention en se référant aux figures 1 à 5.
- La figure 1 est une vue en coupe axiale, longitudinale d'un actionneur antivibratoire et de son dispositif de montage selon l'état de la technique.
- La figure 2 est une vue en coupe longitudinale d'un actionneur antivibratoire et de son dispositif de montage selon l'invention.
- La figure 3 est une vue en coupe selon le plan III-III de l'actionneur et de son dispositif de montage de la figure 2.
- La figure 4 est une vue de face d'un premier mode de réalisation préféré d'une glissière d'un dispositif de montage selon l'invention.
- La figure 5 est une vue de face d'un deuxième mode de réalisation préféré d'une glissière d'un dispositif de montage selon l'invention.

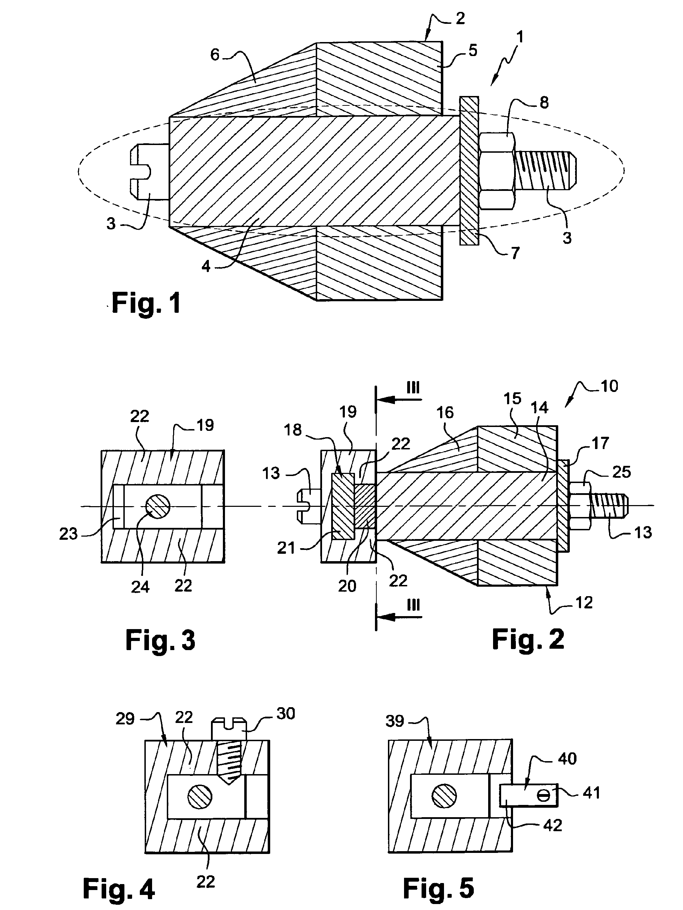

En se référant à la figure 1, un dispositif de montage 1 de l'état de la technique, permettant de fixer un actionneur 2 antivibratoire à la caisse d'un véhicule automobile, comprend une vis 3 unique, traversant ledit actionneur 2, et apte à le solidariser à une paroi (non représentée) de la caisse du véhicule automobile. L'actionneur 2 comprend un noyau de fer doux 4 de forme cylindrique et possédant un canal central, autour duquel sont placés une bobine 5 cylindrique creuse, et un ressort en caoutchouc 6 de forme conique. Ledit ressort 6 est interposé entre la paroi de la caisse sur laquelle est fixé l'actionneur 2, et la bobine 5. Le noyau de fer doux 4 permet d'amplifier le champ magnétique créé par la bobine 5. Par inversions successives du courant électrique circulant dans la bobine 5, ladite bobine 5 vibre autour du noyau 4 selon son axe longitudinal, ce mouvement étant notamment entretenu par le ressort 6 en caoutchouc. La vis 3 traverse, de par en par, le noyau de fer doux 4, en étant logé dans son canal central. Le noyau 4 est bloqué en translation autour de la vis 3, au moyen d'une rondelle 7 évasée et d'un écrou 8 placés à l'extrémité dudit noyau 4, qui est opposée à celle qui vient en butée contre la paroi de la caisse du véhicule.

En se référant à la figure 2, un dispositif de montage 10 selon l'invention se différencie d'un dispositif de montage 1 de l'état de la technique tel que décrit ci-avant, par le fait que l'actionneur 12 antivibratoire comporte un deuxième point de solidarisation à la paroi, sous la forme d'une protubérance 18 appartenant à l'actionneur 12, et apte à venir s'insérer dans une glissière 19 implantée sur ladite paroi. La protubérance 18 comprend un corps cylindrique 20 prolongeant le noyau 14 de fer doux, ledit corps 20 se terminant par un embout cylindrique évasé 21. La glissière 19 est constituée par une pièce plane de forme carrée, dont deux bords 22 opposés ont été rabattus vers l'intérieur de ladite pièce. Les deux rebords 22 opposés, ainsi formés, sont parallèles entre eux, et s'inscrivent dans un même plan, qui est parallèle au plan défini par la surface de ladite pièce. Autrement dit, la pièce présente deux coudes opposés, faisant chacun un angle de 180°. Ces deux coudes ménagent un espace libre entre chacun des deux rebords 22 et la surface de la pièce. L'écartement entre les deux rebords 22 est sensiblement égal au diamètre du corps 20 de la protubérance 18, et la distance reliant le fond des pliures de chaque coude, est sensiblement égale au diamètre de l'embout cylindrique évasé 21. L'espace de la pièce situé entre les deux rebords 22 définit ainsi une rainure. Perpendiculairement à l'axe longitudinal des deux rebords 22, la glissière 19 présente une saillie 23, servant de butée à la protubérance 18, une fois qu'elle a été introduite dans la rainure de la glissière 19. La protubérance 18 comprend un canal central, traversant le corps 20 et l'embout évasé 21, ledit canal ayant les mêmes dimensions que le canal traversant le noyau de fer doux, les deux canaux étant en continuité l'une de l'autre. Le canal résultant traverse, de par en par, l'actionneur 12 antivibratoire. La glissière 19 possède, au fond de la rainure, un alésage circulaire 24. Les dimensions de la protubérance 18, ainsi que le positionnement de la butée 23 de la glissière 19, sont réglées, de manière à faire coïncider l'alésage 24 avec le canal central de l'actionneur 12. Une vis 13 de fixation traverse ainsi le canal central et ledit alésage 24 pour fixer l'actionneur 12 à la paroi de la caisse du véhicule. Le noyau 14 est bloqué en translation autour de la vis 13, au moyen d'une rondelle 17 évasée et d'un écrou 25 placés à l'extrémité dudit noyau 14, qui est opposée à celle qui est prolongée par la protubérance 18. A l'image des actionneurs antivibratoires 2 de l'état de la technique, les actionneurs 12 selon l'invention comportent également une bobine 15 et un ressort 16 en caoutchouc de forme conique, disposés autour du noyau 14 en fer doux, ledit ressort 16 étant interposé entre la glissière 19 et la bobine 15.

En se référant à la figure 4, un premier mode de réalisation préféré de l'invention, implique une glissière 29 dotée d'un dispositif anti-retour sous la forme d'une vis 30 pointeau glissée dans ladite glissière 29 et émergeant dans la rainure. Un trou est alors pratiqué au niveau de l'un des deux rebords 22 de la pièce plane, matérialisant la glissière 29, l'axe de ce trou étant perpendiculaire à l'axe longitudinal dudit rebord 22.

Le montage de l'actionneur 12 vibratoire sur la paroi de la caisse du véhicule, s'effectue d'abord en introduisant l'embout évasé 21 de la protubérance 18 dans la rainure de la glissière 29. Cet embout 21 est amené au contact de la butée 23, puis l'actionneur 12 est fixé à la paroi au moyen de la vis 13. La vis pointeau 30 est alors glissée dans la rainure, pour empêcher tout retour en arrière de la protubérance 18.

En se référant à la figure 5, un deuxième mode de réalisation préféré de l'invention, implique une glissière 39 dotée d'un dispositif anti-retour sous la forme d'un ressort à lame 40. Cette lame 40 est rigide et fait, au repos, un angle avec le fond de la rainure. Par rapport au sens de l'introduction de la protubérance 18 dans la glissière 39, la lame 40 présente une partie amont 41 et une partie aval 42, et est fixée sur le fond de la rainure au niveau de ladite partie amont 41.

Le montage de l'actionneur 12 antivibratoire sur la paroi de la caisse du véhicule, s'effectue d'abord en introduisant l'embout évasé 21 de la protubérance 18 dans la glissière 39. Cet embout 21 passe sur la lame 40, qui se plie pour venir au contact du fond de la rainure. Une fois que l'embout 21 a dépassé la lame 40, celle-ci se détend pour retrouver sa position de repos, et ledit embout 21 est ensuite amené au contact de la butée 23. L'actionneur 12 est fixé à la paroi au moyen de la vis 13.

## Revendications

1. Dispositif comportant un actionneur antivibratoire (2, 12) et son dispositif de montage (1,10) sur un véhicule automobile, comprenant une vis de fixation (3,13) dudit actionneur (2,12) sur une paroi de la caisse dudit véhicule, **caractérisé en ce que** ledit dispositif de montage (10) est doté d'une glissière (19,29,39) fixée sur ladite paroi, et **en ce que** l'actionneur (12) comprend une protubérance (18) apte à venir s'insérer dans ladite glissière (19,29,39), de sorte que ledit actionneur (12) possède deux points de solidarisation à ladite paroi.

2. Dispositif selon la revendication 1, **caractérisé en ce que** la glissière (19,29,39) comporte une rainure dotée d'un alésage (24), pour permettre à la vis (13) de traverser ladite glissière (19,29,39).

3. Dispositif selon l'une quelconque des revendications 1 ou 2, **caractérisé en ce que** la protubérance (18) est allongée, et **en ce que** l'axe de la vis (13) est parallèle à l'axe longitudinal de ladite protubérance (18).

4. Dispositif selon la revendication 3, **caractérisé en ce que** la protubérance (18) possède un canal central pour permettre le passage de la vis (13).

5. Dispositif selon l'une quelconque des revendications précédentes, **caractérisé en ce que** la protubérance (18) comprend un corps cylindrique (20) se terminant par un embout (21) cylindrique évasé.

6. Dispositif selon l'une quelconque des revendications précédentes, **caractérisé en ce que** la glissière (19,29,39) est munie d'une butée (23) de positionnement pour la protubérance (18).

7. Dispositif selon la revendication 4, **caractérisé en ce que** l'actionneur (12) comporte un noyau (14) de fer doux prolongé par la protubérance (18), la vis (13) traversant ces deux éléments (14,18) en continuité l'un de l'autre.

8. Dispositif selon la revendication 7, **caractérisé en ce que** le noyau (14) de fer doux est entouré par une bobine (15) magnétique et par un ressort (16) en caoutchouc, ledit ressort (16) étant interposé entre la paroi et ladite bobine (15).

9. Dispositif selon la revendication 8, **caractérisé en ce que** le noyau (14) est bloqué en translation autour de la vis (13), au moyen d'une rondelle (17) et d'un écrou (25), placés à l'une des extrémités dudit noyau (14).

10. Dispositif selon l'une quelconque des revendications précédentes, **caractérisé en ce que** la glissière (19,29,39) est dotée d'un dispositif anti-retour (30,40), empêchant la protubérance (18) de se déplacer en sens inverse de celui de son insertion dans ladite glissière (19,29,39).

11. Dispositif selon la revendication 10, **caractérisé en ce que** le dispositif anti-retour est constitué par un ressort (40) à lame, apte à se déformer lors de l'insertion de la protubérance (18) dans la glissière (39), et apte à retrouver sa position de repos après le passage de ladite protubérance (18).

12. Dispositif selon la revendication 10, **caractérisé en ce que** le dispositif anti-retour est constitué par une vis pointeau (30) émergeant dans la rainure de la glissière (29).

13. Véhicule automobile, **caractérisé en ce qu'**il comprend un dispositif conforme à l'une des revendications précédentes.

## Claims

1. A device comprising an anti-vibration actuator (2, 12) and its mounting device (1, 10) on a motor vehicle, including an attachment screw (3, 13) of the said actuator (2, 12) on a wall of the body of the said vehicle, **characterized in that** the said mounting device (10) is provided with a slide (19, 29, 39) attached to the said wall, and **in that** the actuator (12) includes a protuberance (18) suited to come to be inserted in the said slide (19, 29, 39), such that the said actuator (12) has two attachment points to the said wall.

2. The device according to Claim 1, **characterized in that** the slide (19, 29, 39) comprises a groove provided with a bore (24) to permit the screw (13) to pass through the said slide (19, 29, 39).

3. The device according to any one of Claims 1 or 2, **characterized in that** the protuberance (18) is elongated, and **in that** the axis of the screw (13) is parallel to the longitudinal axis of the said protuberance (18).

4. The device according to Claim 3, **characterized in that** the protuberance (18) has a central channel to permit the passage of the screw (13).

5. The device according to any one of the preceding claims, **characterized in that** the protuberance (18) includes a cylindrical body (20) terminating by a widened cylindrical end (21).

6. The device according to any one of the preceding claims, **characterized in that** the slide (19, 29, 39) is provided with a positioning stop (23) for the protuberance (18).

7. The device according to Claim 4, **characterized in that** the actuator (12) comprises a soft steel core (14) extended by the protuberance (18), with the screw (13) passing through these two elements (14, 18) continuously from one to the other.

8. The device according to Claim 7, **characterized in that** the soft steel core (14) is surrounded by a magnetic coil (15) and by a rubber spring (16), the said spring (16) being interposed between the wall and the said coil (15).

9. The device according to Claim 8, **characterized in that** the core (14) is blocked in translation around the screw (13), by means of a washer (17) and a nut (25), placed at one of the ends of the said core (14).

10. The device according to any one of the preceding claims, **characterized in that** the slide (19, 29, 39) is provided with a non-return device (30, 40), preventing the protuberance (18) from moving in the opposite direction to that of its insertion in the said slide (19, 29, 39).

11. The device according to Claim 10, **characterized in that** the non-return device is constituted by a leaf spring (40), suited to deform on the insertion of the protuberance (18) in the slide (39), and suited to regain its position of rest after the passage of the said protuberance (18).

12. The device according to Claim 10, **characterized in that** the non-return device is constituted by a set screw (30) emerging in the groove of the slide (29).

13. A motor vehicle, **characterized in that** it includes a device according to one of the preceding claims.

## Patentansprüche

1. Vorrichtung, die einen Antivibrationsaktuator (2, 12) und seine Vorrichtung (1, 10) zur Montage auf ein Fahrzeug aufweist, die eine Schraube (3, 13) zum Befestigen des Aktuators (2, 12) auf einer Wand des Fahrzeugaufbaus des Fahrzeugs aufweist, **dadurch gekennzeichnet, dass** die Montagevorrichtung (10) mit einer Gleitführung (19, 29, 39) versehen ist, die auf der Wand befestigt ist, und dass der Aktuator (12) einen Vorsprung (18) aufweist, der sich in die Gleitführung (19, 29, 39) derart einfügen kann, dass der Aktuator (12) zwei Befestigungspunkte auf der Wand besitzt.

2. Vorrichtung nach Anspruch 1, **dadurch gekennzeichnet, dass** die Gleitführung (19, 29, 39) eine Rille aufweist, die mit einer Bohrung (24) versehen ist, um es der Schraube (13) zu erlauben, die Gleitführung (19, 29, 39) zu durchqueren.

3. Vorrichtung nach einem der Ansprüche 1 oder 2, **dadurch gekennzeichnet, dass** der Vorsprung (18) länglich ist, und dass die Achse der Schraube (13) zu der Längsachse des Vorsprungs (18) parallel ist.

4. Vorrichtung nach Anspruch 3, **dadurch gekennzeichnet, dass** der Vorsprung (18) einen zentralen Kanal besitzt, um das Durchgehen der Schraube (13) zu erlauben.

5. Vorrichtung nach einem der vorhergehenden Ansprüche, **dadurch gekennzeichnet, dass** der Vorsprung (18) einen zylindrischen Körper (20) aufweist, der in einem aufgeweiteten zylindrischen Ansatz (21) endet.

6. Vorrichtung nach einem der vorhergehenden Ansprüche, **dadurch gekennzeichnet, dass** die Gleitführung (19, 29, 39) mit einem Positionieranschlag (23) für den Vorsprung (18) versehen ist.

7. Vorrichtung nach Anspruch 4, **dadurch gekennzeichnet, dass** der Aktuator (12) einen Kern (14) aus Weicheisen aufweist, der von dem Vorsprung (18) verlängert wird, wobei die Schraube (13) diese zwei Elemente (14, 18) ununterbrochen von einem zum anderen durchquert.

8. Vorrichtung nach Anspruch 7, **dadurch gekennzeichnet, dass** der Kern (14) aus Weicheisen von einer Magnetspule (15) und von einer Feder (16) aus Kautschuk umgeben ist, wobei die Feder (16) zwischen die Wand und die Spule (15) eingefügt ist.

9. Vorrichtung nach Anspruch 8, **dadurch gekennzeichnet, dass** der Kern (14) in Verschiebung um die Schraube (13) mit einer Unterlegscheibe (17) und einer Mutter (25), die an einem der Enden des Kerns (14) platziert sind, blockiert ist.

10. Vorrichtung nach einem der vorhergehenden Ansprüche, **dadurch gekennzeichnet, dass** die Gleitführung (19, 29, 39) mit einer Rücklaufschutzvorrichtung (30, 40) versehen ist, die den Vorsprung (18) daran hindert, sich in die umgekehrte Richtung zu der seines Einfügens in die Gleitführung (19, 29, 39) zu bewegen.

11. Vorrichtung nach Anspruch 10, **dadurch gekennzeichnet, dass** die Rücklaufschutzvorrichtung aus einer Blattfeder (40) besteht, die sich beim Einfügen des Vorsprungs (18) in die Gleitführung (39) verformen kann und ihre Ruheposition nach dem Durchgehen des Vorsprungs (18) wieder einnehmen kann.

12. Vorrichtung nach Anspruch 10, **dadurch gekennzeichnet, dass** die Rücklaufvorrichtung aus einer Stellschraube (30) besteht, die in die Rille der Gleitführung (29) vorsteht.

13. Kraftfahrzeug, **dadurch gekennzeichnet, dass** es eine Vorrichtung aufweist, die einem der vorhergehenden Ansprüche entspricht.
